# EUROPÄISCHE PATENTANMELDUNG

(11) **EP 2 253 903 A2**
(43) Veröffentlichungstag der Anmeldung: **24.11.2010**
(21) Anmeldenummer: 10005070.7
(22) Anmeldetag: 14.05.2010
(51) Int. Cl.: F24J 2/54

(54) **Vorrichtung zur Befestigung und Nachführung von Photovoltaikmodulen**

(30) Priorität: 14.05.2009 DE 102009021406
(71) Anmelder: SUNFLOW AG, 94032 PASSAU (DE)
(72) Erfinder: Riss, Stephan, 92224 Amberg (DE); Riss, Gerald, 94032 Passau (DE)
(74) Vertreter: Förster, Susanne

(57) **Zusammenfassung**

Die Erfindung betrifft eine Vorrichtung zur Befestigung und Nachführung von Photovoltaikmodulen (2) mit einer ersten Achse, um die die Module (2) schwenkbar sind und einer Mehrzahl von zweiten Achsen, die zu der ersten Achse im Wesentlichen senkrecht und mit der ersten Achse drehbar sind, wobei jedes Modul (2) um eine der zweiten Achsen über eine gemeinsame Schubstange (3) kippbar ist, wobei ein Grundrahmen (4) vorgesehen ist, mit dem ein Modulrahmen (5) um die erste Achse schwenkbar verbunden ist, und an dem Modulrahmen (5) die über die zweiten Achsen kippbaren Module (2) angeordnet sind. Die Erfindung betrifft außerdem die Verwendung der Vorrichtung auf dem Dach eines Gebäudes.

## Beschreibung

Die vorliegende Erfindung betrifft eine Vorrichtung zur Befestigung und Nachführung von Photovoltaikmodulen mit den weiteren Merkmalen des Oberbegriffs des Patentanspruchs 1. Außerdem betrifft die Erfindung die Verwendung der Vorrichtung auf einem Dach eines Gebäudes.

Vorrichtungen zur Befestigung und Nachführung von Photovoltaikmodulen nach dem Sonnenstand sind bekannt. Die Nachführung der Module nach dem Sonnenstand dient dazu, eine möglichst optimale Energieausbeute der auftreffenden Sonneneinstrahlung zu erzielen. Da sich die Einstrahlungsrichtung im Tages- sowie Jahresverlauf kontinuierlich ändert, ist es daher von Vorteil, die Photovoltaikmodule der sich ändernden Einstrahlungsrichtung nachzuführen.

Darüber hinaus ist es bekannt, Photovoltaikmodule auf den Dächern von Häusern anzuordnen, da dort ausreichend Platz zur Verfügung steht und die Solarmodule in dieser exponierten Lage meist auch nicht im Schatten liegen.

Die DE 20 2007 003 128 U1 betrifft eine Flachdach-Solamachführung, bei der die Solarmodule auf einer Drehbühne angeordnet sind. Die Drehbühne wiederum ist auf einer drehbaren Unterkonstruktion vorgesehen. Außerdem sind eine Stütze und ein Hebelmechanismus zum Anheben der Module integriert. Insgesamt stellt sich diese Bauweise als komplex und produktionstechnisch aufwendig dar.

In DE 10 2007 001 824 A1 ist eine Vorrichtung zur Nachführung von Modulen offenbart, auf welcher mehrere Module angeordnet sind. Jedes Modul ist um eine erste sowie zweite Achse verschwenkbar. Die Verschwenkung der einzelnen Module erfolgt zum einen über eine gemeinsame Schubstange, zum anderen über ein gemeinsames Torsionsrohr, an dem die die Photovoltaikmodule tragenden Konsolen sowie Stützprofile angeordnet sind.

Aus der EP 2 000 750 A2 ist ein System zur Nachführung von Solarkollektoren bekannt, bei welchem an einem oberseitigen Rahmen parallel verlaufende Streben mit den einzelnen Modulen angeordnet sind. Die Verschwenkung des oberseitigen Rahmens selbst erfolgt über eine mittige Lagerung an einer vertikalen Stütze. Der Antrieb dafür wird mittels einer an einem Grundrahmen fixierten Schubstange sowie einer Verbindungsstange, die an dem oberen Rahmen angreift, umgesetzt.

Der Nachteil der Konstruktionen gemäß DE 10 2007 001 824 A1 und EP 2 000 750 A2 besteht darin, dass sie sehr aufwendig konzipiert sind sowie eine erhöhte Anfälligkeit gegen Windbelastung sowie Verwindung begründen. Für die Anordnung auf einem Dach sind sie nicht geeignet.

Die Aufgabe der vorliegenden Erfindung besteht daher darin, eine Vorrichtung zur Befestigung und Nachführung von Photovoltaikmodulen bereitzustellen, die speziell für die Anordnung auf Dächern geeignet ist,

Diese Aufgabe wird durch die gesamte Lehre des Patentanspruchs 1 gelöst. Vorteilhafte Weiterbildungen der Erfindung ergeben sich aus den Unteransprüchen 2-24. Eine vorteilhafte Verwendung der Erfindung geht aus den Ansprüchen 25 - 27 hervor.

Die erfindungsgemäße Vorrichtung zur Befestigung und Nachführung von Photovoltaikmodulen umfasst eine erste Achse, um die die Module schwenkbar sind sowie eine Mehrzahl von zweiten Achsen, die zu der ersten Achse im Wesentlichen senkrecht und mit der ersten Achse drehbar sind, und jedes Modul um eine der zweiten Achsen mittels einer gemeinsamen Schubstange kippbar ist, wobei ein Grundrahmen vorgesehen ist, mit dem ein Modulrahmen um die erste Achse schwenkbar verbunden ist, und an dem Modulrahmen die über die zweiten Achsen kippbaren Module angeordnet sind. Diese Vorrichtung stellt eine einfache, stabile Konstruktion dar, die darüber hinaus auch eine sehr geringe Aufbauhöhe mit sich bringt. Es sind weder massive, in die Höhe ragende Stützträger noch komplizierte Dreh- oder Schiebevorrichtungen zur Nachführung der Module vorgesehen. Mit besonderem Vorteil erlaubt es die Konstruktion für den Fall eines drohenden Unwetters oder eines aufkommenden starken Windes, auf eine Minimalaufbauhöhe zurückgefahren zu werden, indem der Modulrahmen möglichst nahe an dem Grundrahmen heruntergefahren wird. Die Vorrichtung ist einfach ausgeführt, wobei sie gleichzeitig leichtgewichtig ausgebildet ist, Demzufolge ist die Anordnung der erfindungsgemäßen Vorrichtung für Dächer, insbesondere für Flachdächer oder leicht bzw. flach geneigte Dächer besonders vorteilhaft. Die Verbindung von Grundrahmen und Modulrahmen sorgt für eine stabile Gesamtkonstruktion. Die Vorrichtung ist zwar speziell für Dächer geeignet, kann aber auch für Freilandanlagen, d,h, auf dem Boden eingesetzt werden. Für den Grundrahmen sowie den Modulrahmen kann zweckmäßigerweise zur Gewichtsreduzierung Leichtmetall verwendet werden.

Der Grundrahmen ist in vorteilhafter Weise flach auf einem Untergrund, insbesondere einem Dach, angeordnet bzw. befestigbar. Die flache Auflage des Grundrahmens bewirkt einerseits die oben bereits beschriebene niedrige Bauhöhe und sorgt andererseits für eine stabile und sichere Positionierung auf den Untergrund, Der Grundrahmen kann eine randseitige Längsstrebe aufweisen, an der der Modulrahmen über eine erste randseitige Längsstrebe einseitig verschwenkbar angeordnet ist. Die beiden Längsstreben von Grund- und Modulrahmen sind dabei scharnierartig miteinander verbunden. Insbesondere können einzelne Scharniere vorgesehen sein, die entlang der Längsstreben angeordnet sind. Die oben beschriebene erste Achse liegt demnach entlang der beiden randseitigen, einander zugeordneten Längsstreben von Grund- und Modulrahmen. Die Verschwenkbarkeit um die erste Achse wird damit mit einfachen Mitteln realisiert. Gleichzeitig besteht dadurch die Möglichkeit, im Bedarfsfall auf eine sehr niedrige Bauhöhe zurückzufahren.

Der Modulrahmen kann über eine Hebevorrichtung zum Grundrahmen auf- und abbewegbar sein. Die Hebevorrichtung kann an einer Strebe des Grundrahmens befestigt sein und verläuft somit zwischen Grund- und Modulrahmen. Die Hebevorrichtung kann dabei z.B. an einer Strebe des Grundrahmens eingeordnet sein, welche im Wesentlichen senkrecht zu der oben erwähnten randseitigen Längsstrebe verläuft. Eine stabile Verschwenkbarkeit des Modulrahmens zum Grundrahmen wird dadurch herbeigeführt.

Als Hebevorrichtung kann zweckmäßigerweise ein Teleskopzylinder vorgesehen sein, der sich beim Herunterfahren des Modulrahmens in Richtung Grundrahmen in seiner Länge entsprechend verkürzt und sich somit der niedrigen Bauhöhe anpasst. Der Teleskopzylinder ist am Grundrahmen ebenfalls schwenkbar angeordnet, so dass er die Kippbewegung mit dem Modulrahmen mit ausführen kann.

Die Hebevorrichtung bzw. der Teleskopzylinder ist zweckmäßigerweise motorisch angetrieben, wobei über eine entsprechende Steuereinrichtung der optimale Schwenkgrad automatisch einstellbar ist. Mit der Hebevorrichtung bzw. über die Verschwenkung der ersten Achse (sogenannte Elevations-Drehachse) wird der Elevationswinkel der Photovoltaikmodule, also der jahreszeitlich bedingte Sonneneinstxahlwinkel, eingestellt.

Der Modulrahmen kann Querstreben aufweisen, auf welchen die um die zweiten Achsen kippbaren Module in stabiler Weise angeordnet sind. Die Querstreben können in regelmäßigen Abständen entlang der sich gegenüberliegenden Längsstreben des Modulrahmens positioniert sein. Dabei können die Querstreben senkrecht zu den Längsstreben ausgerichtet sein. Auf jeder Querstrebe kann ein Modul angeordnet sein.

Das jeweilige Modul kann auf mindestens zwei Trägerschienen befestigt sein, welche über die zweite Achse kippbar auf der Querstrebe angeordnet sind. Die Querstreben dienen damit gleichzeitig der Befestigung sowie der Verschwenkbarkeit der Module in eine Drehrichtung. Die zweite Achse, die die Drehung der Module in Ost-West-Richtung, also tageszeitabhängig, bewirkt, wird auch als azimutische Drehachse bezeichnet. Durch die Querstreben erhält der Modulrahmen eine hohe Stabilität und Verwindungsstreifigkeit.

Die Schubstange, mittels welcher die Module über die zweiten Achsen kippbar sind, kann an jeweils einer der Trägerschienen über jeweils ein mit der Trägerschiene verbundenes Zwischenstück angreifen. Bei dem Zwischenstück kann es sich um schwingen- oder sichelförmige Zwischengelenke handeln, welche an ihrem einen Ende gelenkig mit der Schubstange verbunden und mit ihrem anderen Ende am Ende der Trägerschiene befestigt ist. Durch eine Bewegung der Schubstange ziehen die Zwischenstücke an den Trägerschienen und bewirken deren Kippbewegung.

Vorteilhafterweise können die Module in einem Azimutwinkel von - 60° bis + 60°, insbesondere von - 45° bis + 45°, verschwenkbar sein. Dadurch wird sichergestellt, dass die Sonneneinstrahlung des gesamten Tages mit einer optimalen Energieausbeute von den Modulen aufgefangen wird.

Die Schubstange selbst kann über einen Betätigungszylinder antreibbar sein. Dieser wiederum kann mit einer Steuereinrichtung zur idealen Nachführung der Module in Verbindung stehen. Zweckmäßigerweise wird auch die Schubstange bzw. der Betätigungszylinder motorisch angetrieben.

Der Grundrahmen kann im Wesentlichen dreiecksförmig aufgebaut sein, wodurch er in stabiler Weise auf dem Boden aufliegt. Die Dreiecksform bewirkt außerdem eine Materialersparnis und dadurch gleichzeitig ein geringes Gewicht. Die Dreiecksform hat außerdem den Vorteil der Verwindungsstreifigkeit und des geringen Platzbedarfs.

Grund- und Modulrahmen können zueinander in einem Winkel von 10° - 80°, insbesondere von 25° - 65° verschwenkbar sein. Dieser breite Bereich des Elevationswinkels ermöglicht eine ideale Ausrichtung der Module zu jeder Jahreszeit. Die Möglichkeit, den Modulrahmen auf einen sehr geringen Schwenkwinkel zum Grundrahmen zurückzufahren, ist besonders dann vorteilhaft, wenn ein Unwetter oder ein starker Wind aufkommt, welche zu hohen mechanischen Belastungen vor allem des aufragenden Modulrahmens fuhren würde. Die Möglichkeit, die Module nahezu flachzulegen, verhindert einen gefährlichen Druckaufbau bei einer starken Luftströmung.

Zur Anordnung der Vorrichtung auf einem Dach kann mindestens eine Befestigungsplatte vorgesehen sein, auf welcher der Grundrahmen z,B. verschraubt ist. Die Befestigungsplatte kann aus Beton bestehen und weist somit das nötige Gewicht für eine sichere Standfestigkeit auf. Damit das Dach bzw. der Untergrund geschont wird, kann die mindestens eine Befestigungsplatte auf mindestens einer Gummi- oder Folienmatte angeordnet sein. Die Gummi- oder Folienmatte sorgt gleichzeitig für eine Haftung auf dem Untergrund, so dass ein Rutschen und eine Beschädigung des Dachs vermieden werden. Die beschriebene Plattenbefestigung ist besonders für Flachdächer oder flach geneigte Dächer geeignet. Die Befestigungsmethode hat außerdem den Vorteil, dass es bei der Montage bzw. beim Aufstellen keine Dachdurchdringung erforderlich ist.

Alternativ zu der geschilderten Dachbefestigung kann der Grundrahmen auch mittelbar oder unmittelbar am Dach befestigt, z.B. angeschraubt, sein. Eine solche Festverschraubung mit Dachdurchdringung wird z.B. bei Trapezdächern durchgeführt.

Mit Vorteil kann eine Steuerungsanordnung zur Nachführung bzw. Verschwenkung der Module vorgesehen sein. Die Steuerungsanordnung kann eine Software mit standort-, tages- und jahresspezifischen Daten beinhalten, so dass die Module stets ideal zur Sonneneinstrahlung ausgerichtet sind und damit den bestmöglichen Wirkungsgrad erzielen können.

Zweckmäßigerweise kann ein Windsensor vorgesehen sein, der die Windstärke misst und die Messdaten an die Steuerungsanordnung weiterleitet. Die Steuerungsanordnung kann dabei so programmiert sein, dass sie ab einer bestimmten Windstärke den Modulrahmen herunterfährt und die Module in eine waagrechte Position verschwenkt, so dass möglichst wenig Angriffsfläche für den Wind vorhanden ist. Zusätzlich oder alternativ kann auch ein Feuchtigkeits- oder Regensensor angeordnet sein, der ebenfalls ab einem bestimmten Feuchtegrad dazu führt, dass die Module in ihre Grundposition zurückgeführt werden.

Die Vorrichtung zur Befestigung und Nachführung von Photovoltaikmodulen wird mit besonderem Vorteil auf einem Dach eines Gebäudes verwendet. Aufgrund ihrer geringen Bauhöhe, Leichtigkeit sowie einfachen und schnellen Montage ist sie für das Dach besonders geeignet. Bei dem Dach kann es sich z.B. um ein Flachdach oder auch ein flach geneigtes Dach handeln.

Die Erfindung ist anhand von vorteilhaften Ausführungsbeispielen gemäß den Zeichnungsfiguren näher erläutert. Diese zeigen:
- Fig. 1:: eine perspektivische Darstellung der erfindungsgemäßen Vorrichtung;
- Fig. 2:: eine Vorderansicht der Vorrichtung gemäß Fig. 1 bei einem Elevati- onswinkel von 25°;
- Fig. 3:: eine Seitenansicht der Vorrichtung gemäß Fig. 2;
- Fig. 4:: eine Vorderansicht der Vorrichtung gemäß Fig. 1 mit einem Elevati- onswinkel von 65°;
- Fig. 5:: eine Seitenansicht der Vorrichtung gemäß Fig. 4;
- Fig. 6:: eine schematische Seitendarstellung der Befestigung des Grundrah- mens auf einer Betonplatte;
- Fig. 7:: eine schematische Seitendarstellung der Befestigung des Grundrah- mens auf einem Trapezblech sowie
- Fig. 8:: schematisches Blockschaltbild.

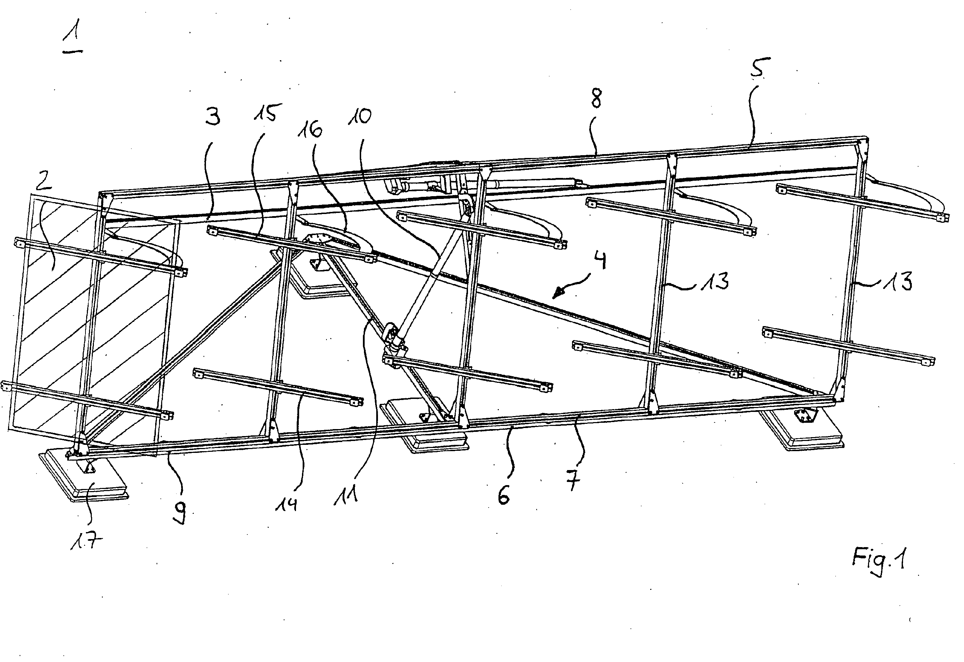

Die Vorrichtung zur Befestigung und Nachführung von Photovoltaikmodulen in ihrer Gesamtheit ist mit Bezugsziffer 1 bezeichnet und ist in Fig. 1 perspektivisch dargestellt. Sie umfasst eine erste Achse, um die die Module 2 schwenkbar sind sowie eine Mehrzahl von zweiten Achsen, die zu der ersten Achse im Wesentlichen senkrecht und mit der ersten Achse drehbar sind, wobei jedes Modul 2 um eine der zweiten Achse über eine gemeinsame Schubstange 3 kippbar ist. Ferner umfasst die Vorrichtung einen Grundrahmen 4, mit dem ein Modulrahmen 5 um die erste Achse schwenkbar verbunden ist, und an dem Modulrahmen 5 die über die zweiten Achsen kippbaren Module 2 angeordnet sind. In Fig. 1 ist ein Modul 2 mit einer schraffierten Fläche exemplarisch eingezeichnet. Die Vorrichtung ist in dieser Rahmenbauweise sehr leichtgewichtig ausgeführt. Zudem hat die Vorrichtung eine niedrige Bauhöhe und ist besonders für die Anordnung auf Dächern geeignet. In Bedarfsfall (z.B. bei Sturm) ist es möglich, den Modulrahmen 5 bis nahezu waagrecht aufliegend auf den Grundrahmen 4 herunterzufahren, so dass die gesamte Höhe nur noch sehr gering ist und wenig Angriffsfläche für den Wind vorliegt.

Der Grundrahmen 4 ist flach auf einem Untergrund, z.B. einem Dach, angeordnet bzw. befestigbar. Der flach auf dem Untergrund angeordnete Grundrahmen 4 trägt zur niedrigen Bauhöhe bei und stellt eine stabile Befestigungsmöglichkeit auf dem Untergrund dar.

Der Grundrahmen 4 weist eine randseitige Längsstrebe 6 auf, an der der Modulrahmen 5 über eine erste randseitige Längsstrebe 7 einseitig schwenkbar um die erste Achse angeordnet ist. Die Längsstrebe 6 sowie die erste Längsstrebe 7 sind über Scharniere 9 schwenkbar miteinander verbunden.

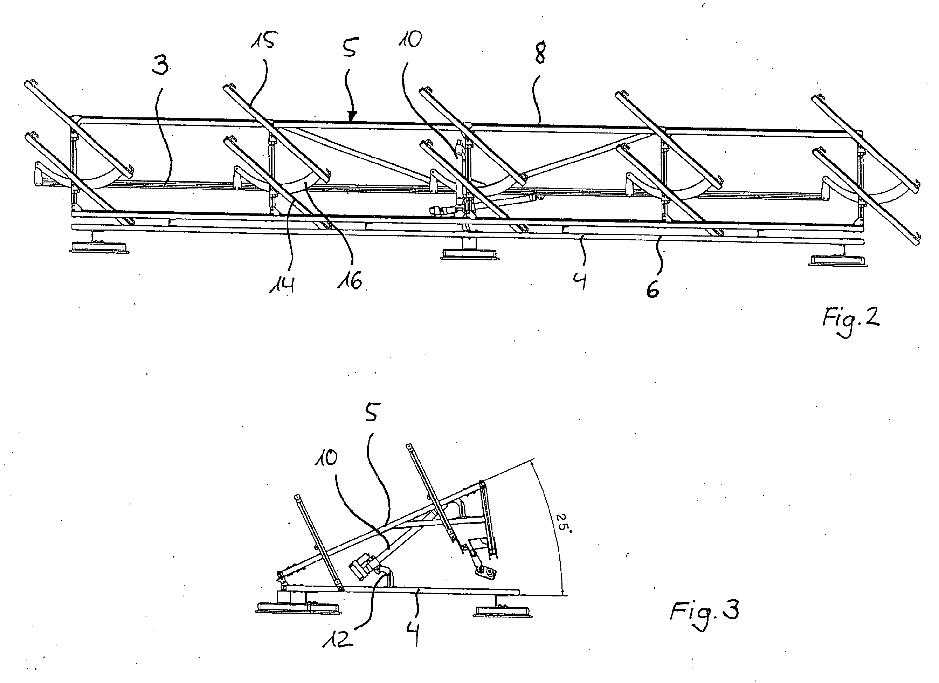

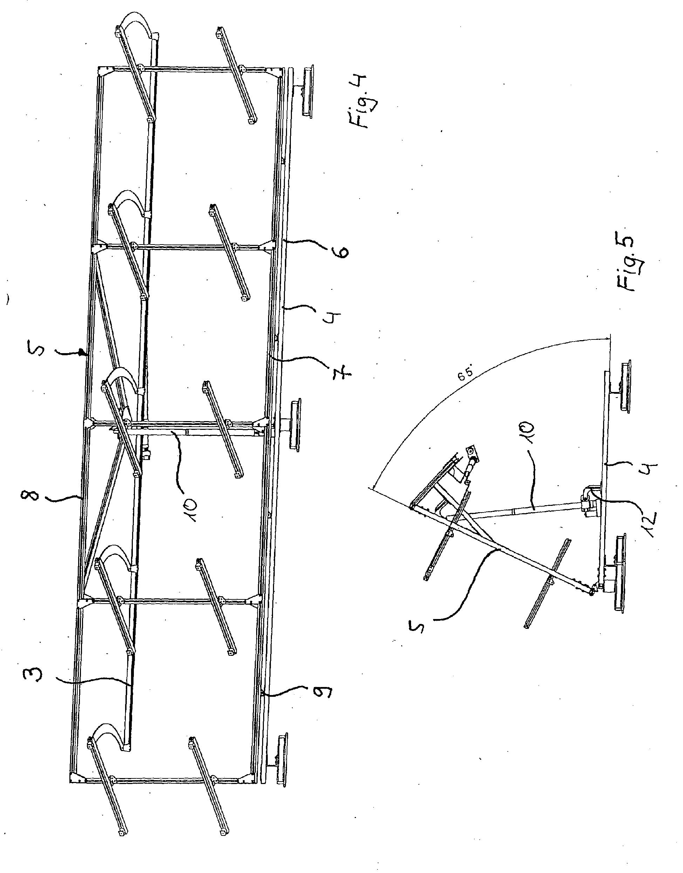

Der Modulrahmen 5 ist über eine Hebevorrichtung, einem Teleskopzylinder 10, zum Grundrahmen 4 auf- und abbewegbar. Der Teleskopzylinder 10 greift einerseits im oberen Bereich des Modulrahmen 5 an und ist andererseits auf einer Querstrebe 11 des Grundrahmens 4 über ein Zwischenstück 12 schwenkbar befestigt. Wie aus den Fig. 3 und 5 hervorgeht, führt auch der Teleskopzylinder 10 beim Auf- und Abbewegen des Modulrahmens 5 eine entsprechende Kippbewegung aus, wobei gleichzeitig der obere Bereich des Teleskopzylinders 10 ein- und ausfährt. Der Teleskopzylinder 10 ist motorisch angetrieben, was jedoch in den Zeichnugsfiguren nicht näher dargestellt ist.

Der Modulrahmen 5 weist Querstreben 13 auf, auf welchen die über die zweiten Achsen kippbaren Module 2 angeordnet sind. Die Querstreben 13 sind zwischen der ersten 7 und zweiten Längsstrebe 8 senkrecht dazu angeordnet und bilden somit insgesamt einen stabilen und verwindungssteifen Rahmen. Auf jeder Querstrebe 13 ist ein Modul 2 angeordnet. Dabei ist das jeweilige Modul 2 auf zwei Trägerschienen 14, 15 befestigt, welche über die zweite Achse kippbar auf der Querstrebe 13 angeordnet sind. Die Anordnung des Moduls 2 geht vor allem aus Fig. 1 hervor, in welcher beispielhaft ein Modul 2 auf den Trägerschienen 14, 15 eingezeichnet ist.

Die Schubstange 3 greift an jeweils einer der Trägerschienen 15 über jeweils ein mit der Trägerschiene 15 verbundenes Zwischenstück 16 an. Das sichelförmige Zwischenstück 16 ist einerseits gelenkig mit der Schubstange 3 verbunden und andererseits am Ende der Trägerschiene 15 befestigt, Befindet sich die Schubstange 3 in der linken Position (siehe Fig. 2), dann sind die Module 2 in einem Azimutwinkel von - 45° ausgerichtet. Befindet sich die Schubstange 3 in der rechten Position (siehe Fig. 4), dann befinden sich die Module 2 in einem Azimutwinkel von + 45°. Dadurch werden die Module 2 tageszeitabhängig der Sonne in Ost-West-Richtung nachgeführt.

Die Module 2 können auch in einem größeren Azimutwinkel von z.B. - 60° bis + 60 ° verschwenkbar sein.

Die Schubstange 3 ist über einen motorisch angetriebenen Betätigungszylinder, der in den Zeichnungsfiguren nicht dargestellt ist, antreibbar.

Der Grundrahmen 4 ist im Wesentlichen dreiecksförmig aufgebaut, so dass er stabil auf dem Untergrund aufliegt. Der Grundrahmen 4 ist alleine oder auch zusammen mit dem Modulrahmen leichtgewichtig und dennoch verwindungssteif ausgebildet.

Grundrahmen 4 und Modulrahmen 5 sind zueinander in einem Winkel von 10° bis 80°, insbesondere von 25° bis 65°, verschwenkbar. Diese Verschwenkbarkeit um den sogenannten Elevationswinkel geht insbesondere aus den Zeichnungsfiguren 2 - 5 hervor. In den Fig. 2 und 3 nimmt der Grundrahmen 4 zum Modulrahmen 5 einen Elevationswinkel von 25° ein. Diese Position wird auch eingenommen, wenn z.B. ein Unwetter aufkommt, so dass möglichst wenig Angriffsfläche für den Wind zur Verfügung steht.

In den Fig. 4 und 5 nimmt der Grundrahmen 4 zum Modulrahmen 5 einen Elevationswinkel von 65° ein, Diese Einstellung wird z.B. im Winter gewählt, wenn die Sonneneinstrahlung flach ist und auf diese Weise mit dem größtmöglichen Wirkungsgrad auf die Module 2 auftreffen kann.

Zur Anordnung der Vorrichtung 1 auf einem Dach sind Befestigungsplatten 17 vorgesehen, die mit dem Grundrahmen 4 über ein Gelenk-Verbindungsprofil 18 verschraubt sind.

Die Befestigungsplatten 17 bestehen aus Beton und sorgen damit für das nötige Gewicht, damit die Vorrichtung 1 stabil auf dem Untergrund stehen bleibt. Eine zusätzliche Befestigung der Befestigungsplatten 17 auf dem Untergrund ist nicht erforderlich.

Den Schrauben ist die Bezugsziffer 20 zugeordnet.

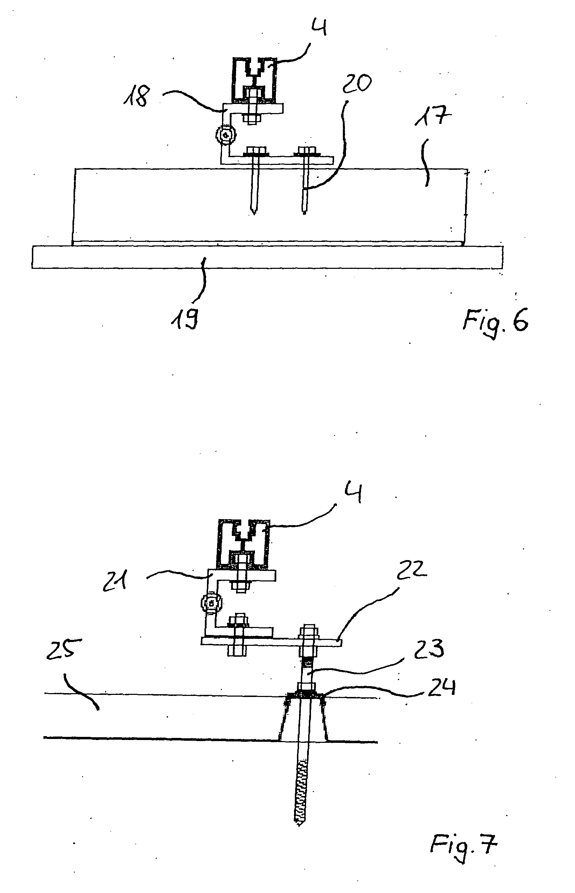

Jede Befestigungsplatte 17 ist auf einer Folienmatte 19 zum Schutz des Untergrundes bzw. des Dachs sowie zum Antirutschschutz angeordnet (siehe Fig. 6).

Fig. 7 zeigt eine alternative Befestigungsmöglichkeit des Grundrahmens 4 auf einem Trapezdach. Dabei ist der Grundrahmen 4 über ein Gelenk-Verbindungsprofil 20, eine Verbinderplatte 22, eine Stockschraube 23 sowie ein Trapezblech 24 mit der Unterkonstruktion, also dem Trapezdach 25 verbunden.

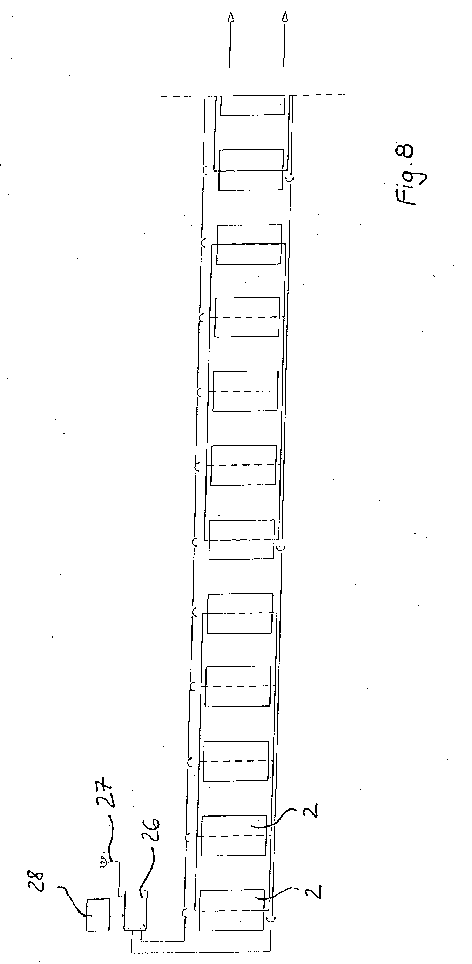

Das Blockschaltbild gemäß Fig. 8 zeigt, dass die Vorrichtung eine Steuerungsanordnung 26 zur Nachführung bzw. Verschwenkung der Module 2 aufweist. Die Steuerungsanordnung 26 beinhaltet eine Software mit standort-, tages- und jahresspezifischen Daten, so dass die Module der Sonneneinstrahlung zur Erhöhung der Energieausbeute nachgeführt werden können. Außerdem ist ein PC 28 der Steueranordnung 26 vorgeschaltet. Über den PC 28 kann der Steuerungsanordnung 26 eine Software zur Konfiguration bzw. allgemeine standortspezifische Daten zugeführt werden.

Zusätzlich ist ein Windsensor 27 vorgesehen, der als Sicherheitsschaltung fungiert und bei starkem Wind ein entsprechendes Signal an die Steuerungsanordnung 26 weiterleitet, so dass die Module 2 in ihre flache Grundposition zurückgefahren werden.
s

Die beschriebene Vorrichtung ist aufgrund ihres geringen Gewichtes sowie ihrer einfachen Montierbarkeit und geringen Anzahl an Bauteilen besonders für die Verwendung auf einem Flachdach oder einem flach geneigten Tag geeignet. Das Dach kann dazu eine maximale Dachneigung von 30° aufweisen.

### BEZUGSZEICHENLISTE

- 1): Vorrichtung
- 2): Module
- 3): Schubstange
- 4): Grundrahmen
- 5): Modulrahmen
- 6): Längsstreben
- 7): erste Längsstrebe
- 8): zweite Längsstrebe
- 9): Scharnier
- 10): Teleskopzylinder
- 11): Querstrebe
- 12): Zwischenstück
- 13): Querstrebe
- 14): Trägerschiene
- 15): Trägerschiene
- 16): Zwischenstück
- 17): Befestigungsplatte
- 18): Gelenk-Verbindungsprofil
- 19): Folienmatte
- 20): Schraube
- 21): Gelenh-Verbindungsprofil
- 22): Verbinderplatte
- 23): Stockschraube
- 24): Trapezblech
- 25): Trapezdach
- 26): Steuerungsanordnung
- 27): Windsensor
- 28): PC

## Patentansprüche

1. Vorrichtung zur Befestigung und Nachführung von Photovoltaiknodulen (2) mit einer ersten Achse, um die die Module (2) schwenkbar sind und einer Mehrzahl von zweiten Achsen, die zu der ersten Achse im Wesentlichen senkrecht und mit der ersten Achse drehbar sind, wobei jedes Modul (2) um eine der zweiten Achsen mittels einer gemeinsamen Schubstange (3) kippbar ist,
**dadurch gekennzeichnet, dass**
ein Grundrahmen (4) vorgesehen ist, mit dem ein Modulrahmen (5) um die erste Achse schwenkbar verbunden ist, und an dein Modulrahmen (5) die über die zweiten Achsen kippbaren Module (2) angeordnet sind.

2. Vorrichtung nach Anspruch 1,
**dadurch gekennzeichnet, dass**
der Grundrahmen (4) flach auf einem Untergrund, insbesondere einem Dach, angeordnet bzw. befestigbar ist,

3. Vorrichtung nach einem der Ansprüche 1 oder 2,
**dadurch gekennzeichnet, dass** der Grundrahmen (4) eine randseitige Längsstrebe (6) aufweist, an der der Modulrahmen (5) über eine erste randseitige Längsstrebe (7) einseitig schwenkbar angeordnet ist.

4. Vorrichtung nach einem der vorhergehenden Ansprüche,
**dadurch gekennzeichnet, dass**
der Modulrahmen (5) über eine Hebevorrichtung zum Grundrahmen (4) auf- und abbewegbar ist,

5. Vorrichtung nach Anspruch 4,
**dadurch gekennzeichnet, dass** die Hebevorrichtung an einer Strebe des Grundrahmens (4) befestigt ist.

6. Vorrichtung nach einem der Ansprüche 4 oder 5,
**dadurch gekennzeichnet, dass** als Hebevorrichtung ein Teleskopzylinder (10) vorgesehen ist.

7. Vorrichtung nach Anspruch 5 oder 6,
**dadurch gekennzeichnet, dass** die Hebevorrichtung motorisch angetrieben ist.

8. Vorrichtung nach einem der vorhergehenden Ansprüche,
**dadurch gekennzeichnet, dass**
der Modulrahmen (5) Querstreben (13) aufweist, auf welchen die über die zweiten Achsen kippbaren Module (2) angeordnet sind.

9. Vorrichtung nach Anspruch 8,
**dadurch gekenntzeichnet, dass** auf jeder Querstrebe (13) ein Modul (2) angeordnet ist.

10. Vorrichtung nach einem der Ansprüche 8 oder 9,
**dadurch gekennzeichnet, dass**
das jeweilige Modul (2) auf mindestens zwei Trägerschienen (14, 15) befestigt ist, welche über die zweite Achse kippbar auf der Querstrebe (13) angeordnet sind.

11. Vorrichtung nach Anspruch 10,
**dadurch gekennzeichnet, dass**
die Schubstange (3) an jeweils einer der Trägerschienen (15) über jeweils ein mit der Trägerschiene (15) verbundenes Zwischenstück (16) angreift.

12. Vorrichtung nach einem der vorhergehenden Ansprüche,
**dadurch gekennzeichnet, dass**
die Module (2) in einem Azimutwinkel von - 60° bis + 60°, insbesondere von - 45° bis + 45°, verschwenkbar sind.

13. Vorrichtung nach einem der vorhergehenden Ansprüche,
**dadurch gekennzeichnet, dass** die Schubstange (3) über einen Betätigungszylinder antreibbar ist.

14. Vorrichtung nach einem der vorhergehenden Ansprüche,
**dadurch gekennzeichnet, dass** die Schubstange (3) oder der Betätigungszylinder motorisch angetrieben ist.

15. Vorrichtung nach einem der vorhergehenden Ansprüche,
**dadurch gekennzeichnet, dass** der Grundrahmen (4) im Wesentlichen dreiecksförmig aufgebaut ist,

16. Vorrichtung nach einem der vorhergehenden Ansprüche,
**dadurch gekennzeichnet, dass**
Grundrahmen (4) und Modulrahmen (5) zueinander in einem Winkel von 10° - 80°, insbesondere von 25° - 65°, verschwenkbar sind.

17. Vorrichtung nach einem der vorhergehenden Ansprüche,
**dadurch gekennzeichnet, dass**
mindestens eine Befestigungsplatte (17) zur Anordnung der Vorrichtung (1) auf einem Dach vorgesehen ist.

18. Vorrichtung nach Anspruch 17,
**dadurch gekennzeichnet, dass** der Grundrahmen (4) auf der mindestens einen Befestigungsplatte (17) befestigt, z.B. verschraubt, ist.

19. Vorrichtung nach einem der Ansprüche 17 oder 18,
**dadurch gekennzeichnet, dass** die Befestigungsplatten (17) aus Beton bestehen.

20. Vorrichtung nach einem der Ansprüche 17-19,
**dadurch gekennzeichnet, dass**
die mindestens eine Befestigungsplatte (17) auf mindestens einer Gummi- oder Folienmatte angeordnet ist.

21. Vorrichtung nach einem der Ansprüche 1-16,
**dadurch gekennzeichnet, dass**
der Grundrahmen (4) mittelbar oder unmittelbar am Dach befestigt, z.B. angeschraubt, ist.

22. Vorrichtung nach einem der vorhergehenden Ansprüche,
**dadurch gekennzeichnet, dass**
eine Steuerungsanordnung (26) zur Nachführung bzw. Verschwenkung der Module (2) vorgesehen ist.

23. Vorrichtung nach Anspruch 22,
**dadurch gekennzeichnet, dass**
die Steuerungsanordnung (26) eine Software mit standort-. tages- und jahresspezifischen Daten beinhaltet.

24. Vorrichtung nach einem der vorhergehenden Ansprüche,
**dadurch gekennzeichnet, dass** ein Windsensor (27) vorgesehen ist.

25. Verwendung der Vorrichtung gemäß mindestens einem der Ansprüche 1 - 24 auf einem Dach eines Gebäudes.

26. Verwendung der Vorrichtung nach Anspruch 25,
**dadurch gekennzeichnet, dass** es sich bei dem Dach um ein Flachdach oder flach geneigtes Dach handelt.

27. Verwendung der Vorrichtung nach einem der Ansprüche 25 oder 26,
**dadurch gekennzeichnet, dass** das Dach eine maximale Dachneigung von 30° aufweist.
